**Europäisches Patentamt**

**European Patent Office**

**Office européen des brevets**

(19)

(11) Veröffentlichungsnummer: **0 217 247 B1**

(12) **EUROPÄISCHE PATENTSCHRIFT**

(45) Veröffentlichungstag der Patentschrift: **13.03.91**

(21) Anmeldenummer: **86112973.2**

(22) Anmeldetag: **19.09.86**

(51) Int. Cl.5: **C08G 18/40, C08G 18/46, C08G 18/50, C07C 211/54**

(54) **Verfahren zur Herstellung von Polyaminen, Polyamine und deren Verwendung zur Herstellung von Polyurethanen.**

(30) Priorität: **01.10.85 DE 3534947**

(43) Veröffentlichungstag der Anmeldung: **08.04.87 Patentblatt 87/15**

(45) Bekanntmachung des Hinweises auf die Patenterteilung: **13.03.91 Patentblatt 91/11**

(84) Benannte Vertragsstaaten: **AT BE CH DE FR GB IT LI NL SE**

(56) Entgegenhaltungen: **EP-A- 0 097 290** **WO-A-79/00161** **FR-A- 1 444 702**

(73) Patentinhaber: **BAYER AG**

**W-5090 Leverkusen 1 Bayerwerk(DE)**

(72) Erfinder: **Rasshofer, Werner, Dr.** **Leopold-Gmelin-Strasse 31** **W-5000 Köln 80(DE)**

EP 0 217 247 B1

## Beschreibung

Die Erfindung betrifft ein Einstufenverfahren zur Herstellung von Polyaminen mit primären Aminogruppen, vorzugsweise aromatischen Aminogruppen, durch Hydrolyse von endständige Isocyanatgruppen aufweisenden Verbindungen mit einem NCO-Gohalt von 0,5 bis 40 Gew.-% mit mindestens äquivalenten Mengen Wasser in Gegenwart von einbaufähigen Katalysatoren, bevorzugt einbaufähigen Salze "oder einbaufähigen tertiären Amine" bei vorzugsweise erhöhten Reaktionstemperaturen. Die Hydrolyse führt unter Kohlendioxidabspaltung direkt zu den Polyaminen, die nach üblichen Methoden abgetrennt oder isoliert werden können.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung eines Überschuß einer starken Mineralsäure nicht unterdrücken. Neuere Beispiele dieser Verfahrensweise finden sich in der JP-PS 55 007 829.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegegebenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO:NH-Verhältnis = 1:1,5 bis 1:5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure gemäß DE-P 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder sind gemäß US-PS 3 044 989 durch Umsetzung höhermolekularer Polyhydroxylverbindungen mit Acrylnitril unter anschließender katalytischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z.B. beschrieben in der US-PS 4 180 644 und den DE-A 2 019 432, 2 619 840, 2 648 774 und 2 648 825. Nachteilig für viele Zwecke ist die geringe Reaktivität der solcherart erhaltenen, aromatischen Esteramine.

Geringe Reaktivität weisen auch die Amino- und Estergruppen enthaltenden Verbindungen auf, die nach US-PS 4 504 538 durch Umsetzung von Polyetherpolyolen mit p-Aminobenzoesäureethylester und z.B. auch durch Umsetzung von Polyolen mit Nitrobenzoesäurechlorid und nachfolgende Reaktion der Nitrogruppen zu Aminogruppen erhältlich sind (DE-OS 25 11 093, EP-A 32 547, JP 55 040 742).

Auch die Reaktion von Nitroarylisocyanaten mit Polyolen und nachfolgende Reduktion der Nitrogruppen zu aromatischen Aminogruppen ist bekannt (US-PS 2 888 439).

Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie 130 , 314 f bzw. 332 f (1931) für zwei ganz bestimmte, heteroaromatische Monoisocyansäureester genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

DE-A 29 48 419 und 30 39 600 beschreiben mehrstufige Verfahren zur Herstellung von Polyaminen durch alkalische Hydrolyse von NCO-Voradukten mit einem Überschuß Basen (Alkalihydroxide) bei niedrigen Temperaturen zu Carbamaten, Ansäuern mit äquivalenten oder überschüssigen Mengen an Mineralsäuren oder sauren Ionenaustauscherharzen unter Carbamat-Zersetzung, gegebenenfalls Neutralisation überschüssiger Säuremengen mittels Basen und anschließende Isolierung der Polyamine.

In der DE-OS 31 31 252 wurde vorgeschlagen, die in einer ersten Stufe durch Hydrolyse mit Alkalihydroxiden hergestellten Carbamate durch anschließende thermische Behandlung zu zersetzen, um so zu Polyaminen zu gelangen.

Einstufanverfahren beschreiben die DE-OS 32 23 400, 32 23 298 und 32 23 397. Darin werden (DE-OS 32 23 400) "Etherlösungsmittel" zusammen mit tert. Aminen als Katalysatoren, polare Lösungsmittel (DE-OS 32 23 298) wie Dimethylformamid (DMF) zusammen mit > 0,1 Gew.-% (auf 100 Gew.-% Isocyanat-Verbindung) tert. Amin oder 0,1 - 10 9 Alkalihydroxide, Alkalisilikate, Alkalicyanide als Katalysatoren und (DE-OS 32 23 397) in polaren Lösungsmitteln wie DMF 0,01 -25 Gew.-% nicht einbaufähige Carbonate oder Carboxylate als Katalysatoren verwendet.

Die beschriebenen Verfahren zur Herstellung von Polyaminen sind alle aufwendig. Selbst bei den zuletzt genannten, weniger komplizierten Verfahren zur Umwandlung von Polyisocyanaten in Polyamine sind noch weitere entscheidende Verbesserungen wünschenswert, um zu Polyaminen in wirtschaftlich noch günstigerer Weise zu gelangen. Gegenüber herkömmlichen Verfahren sollten folgende vorteilhafte Verfahrensschritte nicht mehr nötig sein:

1) keine Filtration,
2) keine destillative Abtrennung eines tert. Amins (Katalysators) ;
3) außerdem soll eine drastische Verringerung der notwendigen Katalysatormenge und eine
4) mögliche quantitative Umwandlung von NCO in NH₂-Gruppen erreicht werden.

Völlig überraschend wurde gefunden, daß diese und weitere Vorteile dann erreicht werden, wenn die einstufige Hydrolyse von Polyisocyanaten zu Polyaminen in Gegenwart von einbaufähigen Katalysatoren und von dipolar-aprotischen Lösungsmitteln bei einer Temperatur besonders bevorzugt von > 50°C vorgenommen wird.

Entsprechend dem erfindungsgemäßen Verfahren werden wasserlösliche Lösungsmittel eingesetzt, um eine im wesentlichen homogene Lösung der Reaktionsteilnehmer NCO-Verbindung und Wasser sowie des Katalysators zu erzielen. Eines der besonders geeigneten Lösungsmittel ist dabei das Dimethylformamid.

Es ist aus der DE-AS 1 235 499 bekannt, Lösungen von NCO-Prepolymeren in Dimethylformamid mit etwa äquivalenten Mengen Wasser (80 bis 120 % der Theorie) unter Kettenverlängerung über Harnstoffgruppen in hochviskose Lösungen, welche zur Erspinnung von Elasthanfäden oder für Beschichtungen geeignet sind, zu überführen.

Ferner ist bekannt, daß Isocyanate mit Dialkylformamiden zu Formamidinen reagieren (H. Ulrich et al, J. Org. Chem. 33 , 3928-3930 (1968)). Auch diese Reaktion stört nicht bei der glatten Hydrolysereaktion zu den Polyaminen nach dem erfindungsgemäßen Verfahren.

Ein erheblicher Vorteil des erfindungsgemäßen Verfahrens wird darin gesehen, daß keine Salzbildung der Katalysatoren mit dem abgespalteten CO₂ eintritt, wie dies bei den Alkalihydroxiden beispielsweise der Fall ist, wo erhebliche Mengen an Alkali(hydrogen)carbonaten abfiltriert werden müssen.

Da die einzusetzenden Katalysatoren im Reaktionsmedium gut löslich sind, bestehen keine Verteilungsungleichgewichte wie bei der Verwendung von rasch sedimentierenden Alkalicarbonaten-oder -Hydrogencarbonaten, wie sie nach DE-OS 32 23 297 Verwendung finden. Der im aminischen Produkt verbleibende Katalysator stört im Regelfall wegen der geringen Menge, wie sie bevorzugt verwandt wird, nicht. Außerdem erfolgt bei Reaktionsdurchführung, Aufarbeitung des Ansatzes und Aufbewahrung des aminischen Produkts in der Regel Umwandlung in bzgl. der Isocyanat-Polyadditionsreaktion nicht oder zumindest wesentlich geringer katalytisch wirksame Substanzen.

Das Verfahren mit den erfindungsgemäß einzusetzenden Katalysatoren ist auch besonders gut für die Hydrolyse von NCO-Prepolymeren auf Basis von Polyestern geeignet, da die schonenden Reaktionsbedingungen nicht zu einer Spaltung der Estergruppierung während der Hydrolysereaktion in nennenswertem Ausmaße führen. Die erfindungsgemäß zu verwendenden Katalysatoren stellen technisch leicht zugängliche, wohlfeile Katalysatoren dar.

Gegenstand der Erfindung ist ein Verfahren zur Herstellung von primäre Aminogruppen aufweisenden Polyaminen durch Hydrolyse von NCO-Gruppen aufweisenden Verbindungen in Wasser enthaltenden Medien, indem man.

a) endständige NCO-Gruppen aufweisende Verbindungen, vorzugsweise mit aromatisch gebundenen NCO-Gruppen, mit einem NCO-Gehalt von 0,5 - 40 Gew.- % mit

b) mindestens. 1 Mol Wasser pro Äquivalent NCO der Komponente a)

c) in Gegenwart von sowie

d) in Gegenwart von > 10 Gew.-%, bezogen auf 100 Gew.-% der Komponente a) an wassermischbaren aprotisch-dipolaren Lösungsmitteln, jedoch mindestens in einer solchen Menge, daß eine im wesentlichen homogene, einphasige Mischung entsteht, und gegebenenfalls

e) in Gegenwart von nicht im Sinne von c) katalytisch wirksamen Verbindungen mit ein oder mehreren, an aliphatische, cycloaliphatische, heterocyclische oder aromatische Reste gebundenen Hydroxy- und/oder Amino- und/oder Thiolgruppen unter Aufrechterhaltung einer im wesentlichen homogenen Reaktionsmischung bei Temperaturen von 20 bis 210° C hydrolysiert, dadurch gekennzeichnet, daß als Komponete c) über mindestens eine NCO-reacktive Gruppe einbaufähige oder bereifs in Komponente a) eingebaute Katalysatoren eigesetzt werden, wobei in Abwesenheit von Alkalicarbonaten, Alkali- und Erdalkalisalzen von Mono- oder c) über mindestens eine NCO-reaktive Gruppe einbanfühige oder bereits in Komponente a) eingebante Katalysatoren eingeseteet werden, wobei in Abwesenheit von Alkalicarbonaten, Alkali- und Erdalkalisalzen von Mono- oder Polycarbonsäuren fearbeifet wird, und wobei manm das Reaktionsgemisch gegenfalls während oder nach der Hydrolyse mit einer Säure behandelt.

Erfindungsgemäß ist bevorzugt, daß die einbaufähigen Katalysatoren c) in Kombination mit Alkali- oder Erdalkali-Hydroxiden eingesetzt werden und daß man als einbaufähige Katalysatoren c) Alkalisalze von Hydroxycarbonsäuren und Aminocarbonsäuren sowie t.-Aminoalkohole verwendet und sie in Mengen von 0,0001 - 10 Gew.-%, bezogen auf 100 Gew.-% der Komponente a), einsetzt.

Vorzugsweise erfolgt die Hydrolyse in Gegenwart der 2 bis 10-fachen stöchiometrischen Menge von Wasser, bezogen auf die Menge NCO.

Bevorzugt ist ferner, daß man die Hydrolyse in Gegenwart von wassermischbaren Lösungsmitteln mit Carbonsäure-dialkylamid-, Lactam-, Tetraalkylharnstoff-, Sulfon-, Sulfoxid-, Phosphordialkylamid-Gruppen, mit einem Siedepunkt von 56 bis 250° C, in Mengen von > 30 Gew.-%, insbesondere > 50 Gew.-% d), bezogen auf 100 Gew.-% a), vornimmt.

Besonders vorteilhaft wird die Hydrolyse bei Temperaturen von 75 bis 135° C durchgeführt und bevorzugt drucklos ausgeführt.

Vielfach ist bevorzugt, daß man die Hydrolyse zu den Polyaminen in einer kontinuierlichen Reaktion durchführt.

Die Erfindung betrifft schließlich auch die Verwendung der nach den erfindungsgemäßen Verfahren erhaltenen Polyamine als Reaktionskomponente beim Aufbau von Polyurethanen.

Erfindungsgemäß sind Polyamine mit 0,19 bis 20,3, vorzugsweise 0,46 bis 11,3, besonders bevorzugt 0,58 bis 6,7 Gew.-% primäre Aminogruppen besonders interessant. Polyamine mit aromatisch gebundenen primären Aminogruppen sind bevorzugt, insbesondere die, die durch Hydrolyse von NCO-Verbindungen auf der Basis von Toluylendiisocyanat erhalten wurden.

Als zwei oder mehrere, vorzugsweise aromatische, NCO-Gruppen aufweisende, im erfindungsgemäßen Verfahren einsetzbare NCO-Verbindungen a) werden vorzugsweise entweder modifizierte Polyisocyanate, wie sie durch teilweise Umwandlung der Isocyanatgruppen in Urethan-, Harnstoff-, Biuret-, Uretdion-, Isocyanurat- und/oder Uretonimingruppen entstehen, eingeseetet oder sogenannte NCO-Prepolymere aus gegenüber NCO-Gruppen reaktive H-Gruppen tragenden, mehrwertigen Verbindungen des Molekulargewichts 62 bis 12 000, vorzugsweise 400 bis 6 000, und (überschüssigen) Mengen an aromatischen Polyisocyanaten sowie auch Semiprepolymere aus NCO-Prepolymeren und zusätzlichen niedermolekularen Polyisocyanaten.

Als modifizierte aromatische Polyisocyanate sind beispielsweise geeignet:

Urethangruppen-haltige Polyisocyanate (durch Modifizierung mit niedermolekularen Polyolen entstanden), Harnstoffgruppen aufweisende Polyisocyanate (Wassermodifizierung, DE-PS 1 230 778), Biuretgruppen aufweisende Polyisocyanate (US-PS 3 124 605, 3 201 372, GB-PS 889 050), Isocyanuratgruppen aufweisende Polyisocyanate (DE-PS en 1 022 789 und 1 222 067) sowie Uretdion-oder Uretonimingruppen enthaltende, dimere oder oligomere Polyisocyanate sind bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Urethan- und/oder Harnstoff- und/oder Biuret- und/oder Uretdion- und/oder Isocyanat- und/oder Uretonimin-Gruppen, wie sie im erfindungsgemäßen Verfahren einsetzbar sind, haben üblicherweise einen NCO-Gehalt von 5 bis 40 Gew.-%, bevorzugt 10 bis 25 Gew.-%.

Die im erfindungsgemäßen Verfahren einzusetzenden NCO-Verbindungen a) sind besonders jedoch NCO-Prepolymere, wie sie in an sich bekannter Weise durch Umsetzung von niedermolekularen und/oder höhermolekularen Hydroxy- und/oder Amino- und/oder Thiolgruppen als reaktive Gruppen enthaltenden Verbindungen (Molekulargewicht 62 bis ca. 12 000) mit einem Überschuß an Polyisocyanaten entstehen.

Als Polyisocyanate zur Herstellung der freie NCO-Gruppen aufweisenden Verbindungen kommen im Prinzip beliebige, aromatische, aliphatische und heterocyclische Polyisocyanate in Frage, wie sie z.B. von W. Siefken in Justus Liebigs Annalen der Chemie, 562, S. 75-136, beschrieben werden, beispielsweise solche der Formel Q (NCO)$_n$, in der n = 2 bis 4, vorzugsweise 2 und Q einen Kohlenwasserstoffrest mit 4 bis 15, einen aromatischen Kohlenwasserstoffrest mit 6 bis 15, vorzugsweise 6 bis 13 C-Atomen, bedeuten, z.B. 1,3- und 1,4-Phenylendiisocyanat, 2,4- und 2,6-Toluylendiisocyanat, sowie beliebige Gemische dieser Isomeren, Diphenylmethan-2,4'- und/oder 4,4'- und/oder -2,2'-diisocyanate, einschließlich der Alkyl- und Chlor-substituierten Derivate und Naphthylen-1,5-diisocyanat. Geeignete Diisocyanate sind auch die in DE-A 2 922 966 beschriebenen 2,4'-Diisocyanatodiphenylsulfide und die in z.B. EP 24 665 und DE-A 2 935 318 beschriebenen alkylsubstituierten Diphenylmethandiisocyanate. Auch aliphatische und/oder cycloaliphatische Polyisocyanate wie 1,6-Hexandiisocyanat, Lysinmethylesterdiisocyanat, Isophorondiisocyanat, die Dicyclohexylmethandiisocyanatisomeren oder biurethaltige oder isocyanurathaltige, etwa trifunktionelle Polyisocyanate auf Basis Hexan-1,6-diisocyanat oder Isophorondiisocyanat können zur Anwendung kommen.

Ferner kommen beispielsweise in Frage: Triphenylmethan-4,4',4''-triisocyant, Polyphenyl-polymethylen-polyisocyanate, wie sie durch Anilin-Formaldehyd-Kondensation und anschließende Phosgenierung erhalten und z.B. in den GB-PS'en 874 430 und 848 671 beschrieben werden, m- und p-Isocyanatophenylsulfonyl-isocyanate gemäß der US-PS 3 454 606, perchlorierte Arylpolyisocyanate, wie sie z.B. in der DE-Auslegeschrift 1 157 601 (US-PS 3 277 138) beschrieben werden, Isocyanuratgruppen aufweisende Polyisocyanate, wie sie z.B. in der US-PS 3 001 973, in den DE-PS'en 1 022 789, 1 222 067 und 1 027 394 sowie in den DE-PS'en 1 929 034 und 2 004 048 beschrieben werden, Urethangruppen aufweisende Polyisocyanate, wie sie z.B. in der BE-PS 752 261 oder in den US-PS'en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z.B. in der US-PS 3 654 196 beschrieben werden. Ferner sind Diarylalkylendiisocyanate, welche durch Polymerisation von Acrylnitril und gegebenenfalls weiteren ethylenisch ungesättigten Monomeren in den Diarylalkylendiisocyanaten nach dem Verfahren gemäß EP-A 37 112 (US-PS 4 283 500) erhalten werden, einsetzbar.

Bevorzugt werden in der Regel die technisch leicht zugänglichen Polyisocyanate, z.B. das 2,4-und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), sowie Urethangruppen, Isocyanuratgruppen oder Harnstoffgruppen aufweisende Polyisocyanate ("modifizierte Polyisocyanate"). Besonders bevorzugt werden die modifizierten Polyisocyanate, die sich vom 2,4- und/oder 2,6-Toluylendiisocyanat (TDI) bzw. vom 4,4'- und/oder 2,4'- und/oder 2,2'-Diphenylmethandiisocyanat (MDI) ableiten. Technisch ist die Verwendung von TDI und MDI (oder ihren Isomergemischen) zur NCO-Prepolymerherstellung am bedeutsamsten.

Für die Herstellung der NCO-Prepolymeren werden vorzugsweise Verbindungen mit einem Molekulargewicht von 400 bis 12 000, insbesondere 400 bis 6 000, eingesetzt, welche mindestens 1 bis 8, vorzugsweise 2 bis 4, insbesondere 2 bis 3, reaktive Hydroxyl-, Amino- und/oder Thiolgruppen (bevorzugt Hydroxylgruppen) als reaktive Gruppen pro Mol aufweisen. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, besonders Polyester, Polylactone sowie Polyether; insbesondere aber Hydroxylgruppen tragende Polyether.

Die erfindungsgemäß bevorzugten, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie BF$_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propandiol-(1,3) oder --(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z.B. die aus Glykolen, wie Di- oder Triethylenglykol, 4,4'-Dihydroxyethoxydiphenylmethan, Hexandiol und Formaldehyd oder durch Polymerisation cyclischer Acetale, wie z.B. Trioxan, herstellbaren Verbindungen in Frage.

Als Hydroxylgruppen aufweisende Polycarbonate kommen solche der an sich bekannten Art in Betracht, die z.B. durch Umsetzung von Diolen wie Propandiol-1,3, Butandiol-1,4 und/oder Hexandiol-1,6, Di-, Tri- oder Tetraethylenglykol oder Thiodiglykol mit Diarylcarbonaten, z.B. Diphenylcarbonat, oder Phosgen hergestellt werden können (DE-B 1 694 080, 1 915 908 und 2 221 751; DE-A 2 605 024).

Als Polyester aus Dicarbonsäuren und Diolen kommen vorzugsweise solche aus Adipinsäure und (weniger bevorzugt) Isophthalsäure und geradkettigen und/oder verzweigten Diolen in Betracht, ebenso Lactonpolyester, vorzugsweise auf Basis von Caprolacton und Starterdiolen.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar. Es ist auch möglich, z.B. gemäß DE-A 2 559 372, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den o.g., Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 25 5862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-PS 3 383 351, 3 304 273, 3 523 093, 3 110 695; DE-B 1 152 536) oder Polycarbonatpolyolen (DE-PS2 1 769 795; US-PS 3 647 909) erhalten werden, sind für das erfindungsgemäße Verfahren geeignet.

Vertreter der genannten erfindungsgemäß zu verwendenden Verbindungen sind z.B. in High Polymers, Vol. XVI, "Polyurethanes, Chemistry and Technologie", verfaßt von Saunders-Frisch, Interscience Publishers, New York, London, Band I, 1962, Seiten 32-42 und Seiten 44-54 und Band II, 1964, Seitgen 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der o.g. Verbindungen mit mindestens zwei gegenüber Isocyanaten reaktionsfähigen Wasserstoffatomen mit einem Molekulargewicht von 400 bis 12 000, z.B. Mischungen von verschiedenen Polyethern, eingesetzt werden.

Für die Herstellung des im erfindungsgemäßen Verfahrens einzusetzenden NCO-Prepolymeren kommen, gegebenenfalls nur anteilweise, als Ausgangskomponente auch Verbindungen mit mindestens zwei gegenüber Isocyanaten reaktionsfähigen Wasserstoffatomen und einem Molekulargewicht von 18 bis 399, vorzugsweise 62 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399 verwendet werden.

Als Beispiele für derartige Verbindungen seien genannt: Wasser, Ethylenglykol, Propandiol-(1,2) und -(1,3), Butandiol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri- und Tetrapropylenglykol, Dibutylenglykol und höhere Polyethylen-, Polypropylen-oder Polybutylenglykole mit einem Molekulargewicht bis 399, 4,4'-Dihydroxy-dihenylpropan, Dihydroxyethyl-hydrochinon, Ethanolamin, Diethanolamin, N-Methyldiethanolamin, Triethanolamin und 3-Aminopropanol.

Als niedermolekulare Polyole kommen auch die Gemische von Hydroxylaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat entstehen (DE-A 2 639 084, 2 714 084).

Erfindungsgemäß geeignete aliphatische Diamine sind beispielsweise Ethylendiamin, 1,4-Tetramethylendiamin, 1,6-Hexamethylendiamin, 1,12-Dodecamethylendiamin sowie deren Gemische, Perhydro-2,4'- und -4,4'-diaminodiphenylmethan, p-Xylylendiamin, Bis-(3-aminopropyl)-methylamin, Diaminoperhydroanthrazene und cycloaliphatische Triamine gemäß DE-A 2 614 244. Auch Hydrazin und substituierte Hydrazine, z.B. Methylhydrazin oder Dihydrazidverbindungen, kommen erfindungsgemäß in Betracht.

Als Beispiele für aromatische Diamine seien die Ethergruppen aufweisenden Diamine gemäß DE-A 1 770 525 und 1 809 172 (US-PS'en 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diamino-diphenylmethan, Toluylendiamine, 4,4'-Diaminodiphenylmethan, 4,4'-Diaminodiphenyldisulfide (DE-A 2 404 976), Diaminodiphenyldithioether (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einsetzbaren NCO-Verbindungen ebenfalls, wenn auch weniger bevorzugt, verwendbare Verbindungen sind organofunktionelle Polysiloxane, die zwei endständige, gegenüber Isocyanatgruppen reaktionsfähige Gruppen und Struktureinheiten der Formel -O-Si(R)$_2$- aufweisen, wobei in dieser Formel R für einen C$_1$-C$_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren.

Die freie, aromatisch gebundene Isocyanatgruppen aufweisenden NCO-Prepolymeren werden in an sich bekannter Weise durch Umsetzung der Rektionspartner in der Schmelze oder in Lösung hergestellt. Das Äquivalentverhältnis von NCO-Gruppen zu aktive Wasserstoffatome aufweisenden Gruppen (bevorzugt OH-Gruppen) ist in jedem Fall größer als 1, soll in der Regel zwischen 1,5:1 und 2,8:1 liegen. Selbstverständlich ist es möglich, einen noch größeren Überschuß an Polyisocyanat zu verwenden. Die NCO-Prepolymeren ("NCO-Voraddukte") haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte NCO-Voraddukte, während NCO/OH-Verhältnis von unter 2 eine Erhöhung des mittleren Moле-

kulargewichts der NCO-Voraddukte zur Folge haben. Es ist, wie schon erläutert, auch möglich, niedermolekulare Polyole als Kettenverlängerungsmittel bei der Herstellung der NCO-Prepolymere anteilmäßig neben höhermolekularen Ausgangsverbindungen mitzuverwenden; in diesem Fall erhält man ebenfalls höhermolekulare NCO-Voraddukte.

Werden die so erhaltenen NCO-Prepolymere noch einer Destillation - vorteilhaft unter Verwendung eines Dünnschichtverdampfers - unterworfen, wobei die monomeren Polyisocyanate entfernt werden, so werden im erfindungsgemäßen Verfahren Produkte mit einem sehr geringen bzw. praktisch ohne Gehalt an monomerem Diamin erhalten.

Für das erfindungsgemäße Verfahren werden NCO-Prepolymere bevorzugt, die aus höhermolekularen Polyolen (Molmasse 400-12000), vorzugsweise Polyetherpolyolen, gegebenenfalls unter Mitverwendung von Kettenverlängerungsmitteln der oben beschriebenen Art (Molmasse 62-399), durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,5 Gew.-% bis 10 Gew.-%.

Als NCO-Verbindungen a) bevorzugt man erfindungsgemäß NCO-Prepolymere mit einem Gehalt von 1,5 bis 15 Gew.-% aromatisch gebundenem NCO auf Basis von höhermolekularen, di- oder trifunktionellon Polyether-, Polyester-, Polycarbonat-und Polycaprolacton-Polyolen.

Ferner ist vorteilhaft, daß die NCO-Verbindungen a) freie Carboxylgruppen und/oder Carboxylatgruppen und/oder t.-Aminogruppen enthalten.

Im erfindungsgemäßen Verfahren können jedoch auch sogenannte "Semiprepolymere", d.h. Mischungen von NCO-Prepolymeren mit weiteren freien Polyisocyanaten, eingesetzt werden, die einen u.U. noch höheren Gehalt, z.B. bis 40 Gew.-% NCO, aufweisen können. Aus praktisch/wirtschaftlichen Gründen ist dies jedoch in den meisten Fällen nicht sinnvoll, außerdem können die aus den monomeren Polyisocyanatanteilen entstandenen monomeren Aminanteile bei einer Reihe von Anwendungen stören.

Die freie NCO-Gruppen aufweisenden Verbindungen a) besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 10 Gew.-% NCO.

Die Wassermenge b) beträgt mindestens 1 Mol Wasser pro Äquivalent NCO bei der Hydrolyse der NCO-Verbindungen a). Bevorzugt wird mehr als die einfache stöchiometrische Wassermenge, bvz. 2 - 10 Mole Wasser pro 1 Äquivalent NCO in a), verwendet, zumeist liegt der Anteil Wasser oberhalb von 1 Gew.-% pro 100 Gew.-% NCO-Verbindung a).

Als Komponente c) werden einbaufähige Katalysatoren eingesetzt. Dies sind Verbindungen, die sowohl zumindest eine NCO-reaktionsfähige Gruppe als auch eine Gruppe enthalten, die die Umwandlung von NCO-Gruppen zu $NH_2$-Gruppen katalysiert.

Geeignete NCO-reaktionsfähige Gruppen sind insbesondere Hydroxy-, Mercapto- und prim. bzw. sek. Aminogruppen sowie andere Zerewitinoff-aktiven Wasserstoff enthaltende Gruppen, daneben im Prinzip auch Gruppen, die mit NCO-Gruppen nach anderen Mechanismen als der Isocyanat-Additionsreaktion reagieren, z.B. Ketenaminal-Gruppen (US 4 342 841); D.F.Regelman u.a., ACS Symposium Series 270, S. 125 (1985).

Geeignete katalytisch aktive Gruppen sind z.B. anionische Gruppen wie Alkoxid-, Mercaptid-, (Thio)Phenolat-, Garboxylat-und andere Säuregruppen, Organometallgruppen wie Dialkylzinngruppen, t-Amingruppen wie z.B. Trialkylaminogruppen, Amidingruppen wie z.B. 2-Tetrahydropyrimidinogruppen.

Reaktive und katalytisch-aktive Gruppe können in demselben Molekül vorliegen, können aber auch bei der Verwendung von Salzen auf verschiedenen oder auch beiden Bestandteilen der Salze gebunden sein.

Als Katalysatoren c 1) kommen in Frage (ali)-cyclische und aromatische Carbonsäuren oder Phenole in Form ihrer zu mindest teilweise im Reaktionsgemisch löslichen basischen, Alkali-, Erdalkali- und Erdmetallsalze wie z.B. Hydroxyessigsäure (Glykolsäure), Milchsäure, 2,2-Bis-(hydroxymethyl)-propionsäure (Dimethylolpropionsäure), Apfelsäure, Weinsäure` Citronensäure, Schleimsäure, Mandelsäure, Mercaptoessigsäure, Thioapfelsäure, Aminoessigsäure, Methylaminoessigsäure (N-Methylglycin), 3-Aminopropansäure (Alanin), 4-Aminobutansäure, 6-Aminohexansäure (Aminocapronsäure), Lysin, Asparaginsäure, Glutaminsäure. N-Phenylaminoessigsäure, ferner Aminophenole wie o-, m-, p-Aminophenol, 4-Ethylaminophenol, 2-, 3- und 4-Aminobenzoesäure, 3-Aminozimtsäure, 4-Amino-(1,1'-biphenyl)-4-carbonsäure, Aminophthalsäure, Hydroxybenzoesäuren, o-, m- und p-Aminophenoxyessigsäure.

Als Katalysatoren c 2) kommen z.B. in Frage:

1-Amino-2-diethylaminoethan, N,N',N"-Trimethyldiethylentriamin, 1-Amino-2-dimethylaminopropan, 1-Amino-2-diethylaminopropan, Bis-(3-aminopropyl)-methylamin, 4-Amino-1-diethylaminopentan, N,N-Dimethyl-1,3-benzoldiamin, N,N-Dimethyl-und N,N-Diethyl-1,4-benzoldiamin, 2-[-(4-Aminophenyl)-ethylamino]-ethanol, 3-Amino-1-dimethylamino-4-methylbenzol, 2- und 4-Amino-N,N-dimethylbenzylamin.

2-(Dimethylamino)-ethanol, 2-(2-Dimethylaminoethoxy)-ethanol, 2-Diethylamino-athanol, 2-(2-Diethylaminoethoxy)-ethanol, 2-Dibutylaminoethanol, N-Methyldiethanolamin, N-Butyldiethanolamin, Triethanolamin, N-Methyl-N-(3-aminopropyl)-ethanolamin, 3-Dimethylamino-1-propanol, 1-Dimethylamino-2-propanol, 1-Diethylamino-2-propanol, Bis-(2-hydroxypropyl)-methylamin, 1-Methylpiperazin, 1-Piperazinoethanol, 1-Piperazinoethylamin, 2-Amino- und 4-Aminopyridin, 1,3,5-Trishydroxyethyl-hexahydro-s-triazin, 2-(N-Butylanilino)-ethanol, N,N-Bis-(2-hydroxyethyl)-anilin, 1-(N-Ethylanilino)-2-propanol und entsprechende Derivate der o-, m- und p-Toluidins.

Als Komponente c 3) kommen z.B. Hydroxy-, Amino- oder Mercaptogruppen aufweisende Organozinn-, Organoblei-, Organotitan-oder Organobismutverbindungen in Frage.

Die Menge an verwendetem, einbaufähigem Katalysator beträgt > 0,0001 Gew.-% Katalysator pro 100 Gew.-% NCO-Komponente, bvz. 0,005 - 5 Gew.-%, besonders bvz. 0,1 - 2 Gew.-%/100 Gew.-% NCO-Komponente.

Bevorzugt werden die erfindungsgemäß zu verwendenden Katalysatoren alleine eingesetzt.

In einer besonderen Ausführungsform enthalten die NCO-Gruppen aufweisenden Verbindungen a) bereits die Einheiten der Komponente c), gegebenenfalls nur zum Teil in der katalytischen Salzform, sofern es sich um die einbaufähigen Salze handelt. Solche speziellen NCO-Gruppen aufweisenden Verbindungen können nach bekannten Verfahren hergestellt werden.

Als Lösungsmittel d) werden wassermischbare/wasserlösliche aprotisch-dipolare Lösungsmittel eingesetzt.

Geeignete Lösungsmittelklassen sind:

1. wasserlösliche, aliphatische oder cycloaliphatische Säureamide mit 1 bis 10 Kohlenstoffatomen, z.B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon,
2. wasserlösliche, tetraalkylierte aliphatische Harnstoffe mit 4 bis 12 C-Atomen, z.B. Tetramethylharnstoffe oder Tetraethylharnstoff,
3. wasserlösliche, aliphatische oder cycloaliphatische Sulfone oder Sulfoxide mit 2 bis 10 Kohlenstoffatomen, z.B. Tetramethylensulfon oder Dimethylsulfoxid,
4. wasserlösliche, aliphatische oder cycloaliphatische Phosphorsäureamide, z.B. Hexamethylphosphorsäuretriamid.

Die Lösungsmittel können auch in beliebigen Mischungsverhältnissen zueinander eingesetzt werden. Unter den genannten Lösungsmitteln werden solche bevorzugt, welche bei Normaldruck bei 56-250°C, vorzugsweise 64-165°C, sieden, da sich hierbei die Aufarbeitung vereinfacht.

Bevorzugte wassermischbare Lösungsmittel sind Dimethylformamid, Dimethylacetamid und N-Methyl-pyrrolidon, Tetramethylensulfon, ganz besonders bevorzugt wird als ausschließliches Lösungsmittel N,N-Dimethylformamid verwendet.

Eine Mitverwendung von nicht vollständig mit Wasser mischbaren Lösungsmitteln, z.B. Propionitril, Methylethylenketon, Ethylenacetat oder Kohlenwasserstoffen ist in untergeordneten Mengen möglich, aber nicht bevorzugt.

Für die Mengen (insbesondere die Obergrenzen) an einzusetzenden Lösungsmitteln e) gelten folgende Randbedingungen des Verfahrens:

1. Pro 100 Gew.-% NCO-Verbindung a) sollen in der Hydrolyse-Reaktionsmischung > 10, bevorzugt > 50 und besonders bevorzugt > 100 Gew.-% d) verwendet werden.

Eine definierte Obergrenze existiert nicht. Man wird aber aus praktischen Gründen kaum mehr als 200 - 400 Gew.-% d) pro 100 Gew.-% a) einsetzen.

2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung bei den Reaktionstemperaturen gebildet wird, besonders bevorzugt soviel Wasser, daß eine bei allen Verfahrenstemperaturen einphasige Mischung entsteht.

Die katalytisch wirkenden Verbindungen werden im allgemeinen den Lösungsmitteln und Wasser zugesetzt. Die Zugabe zur Isocyanatgruppenhaltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung < 50 Gew.-% in der Reaktionsmischung aufrechtzuerhalten. Je größer die Verdünnung durch Lösungsmittel (nicht durch Wasser) bei der Reaktion gewählt wird, um so besser wird im allgemeinen der Hydrolyseumsatz, d.h. es werden um so höhere Aminzahlen des Polyamins, d.h. eine um so höhere Konversion der NCO- in die NH₂-Gruppen, erhalten. Eine Grenze der Verdünnung ergibt sich praktisch aus der Wirtschaftlichkeit bei der Aufarbeitung; sie liegt in der Praxis etwa bei 3 %iger Lösung.

Es ist dabei aber mindestens so viel Lösungsmittel mitzuverwenden, daß eine weitgehend homogene, vorzugsweise homogene, Reaktionsmischung verbleibt.

In einer weniger bevorzugten Ausführungsform können der Reaktionsmischung auch Verbindungen mit zwei oder mehrere Hydroxy-, Amino- und/oder Thiolgruppen beigemischt werden. Diese Verbindungen wurden bereits als Aufbaukomponenten der im erfindungsgemäßen Verfahren einsetzbaren NCO-Verbindungan genannt, besonders bevorzugt sind difunktionelle bis gegebenenfalls tetrafunktionelle Verbindungen das Molgewichts 62-2000, insbesondere solche mit mindestens 2 primären Hydroxygruppen, z.B. Ethandiol, Butandiol, Prapandiol, Polyethylenglykole und Trimethylolpropan. Selbstverständlich können auch Verbindungen mit verschiedenen H-aktiven Gruppen verwendet werden, z.B. Aminoethanole.

Verbindungen, die nur eine H-aktive Gruppe aufweisen, z.B. Methanol, Ethanol, Cyclohexanol, Cyclohexylamin, Anilin, können als monofunktionelle Kettenabbrecher mitverwendet werden.

Als Nebenreaktion im erfindungsgemäßen Verfahren kann die Vorverlängerung auftreten, d.h. Isocyanat und bereits gebildetes Amin reagieren unter Kettenverknüpfung zu Harnstoffen. Diese Nebenreaktion läßt sich durch Arbeiten in verdünnter Lösung und Einhaltung relativ hoher Reaktionstemperaturen, z.B. 70-135°C, weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls eine leichte Trübung der Reaktionsmischung erhalten werden, da die Ausgangsstoffe nicht mehr vollständig gelöst sind. Eine Durchführung im stark heterogenen Bereich, z.B. durch übermäßige Wasserzugabe unter Ausfällung des NCO-Prepolymers ergibt jedoch unzureichende Produkte. Durch einige wenige Vorversuche lassen sich die von den Ausgangsverbindungen abhängigen optimalen Mischungsverhältnisse leicht bestimmen.

Die Reaktion kann bei Temperaturen von 50 bis 165°C durchgeführt werden. Ganz besonders bevorzugt wird jedoch bei Temperaturen von 80 bis 130°C gearbeitet, da hierbei die besten Raum/Zeit-Ausbeuten bei gleichzeitig hoher Löslichkeit und überraschenderweise geringster Harnstoff-Verlängerung erreicht werden. Besonders bevorzugt wird am Siedepunkt des Gemisches gearbeitet, der wegen der Anwesenheit von Wasser zumeist bei ca.

90 bis 105° C liegt. Unter besonderen Umständen kann es auch notwendig werden, die Reaktion unter Druck durchzuführen, um ausreichend hohe Temperaturen einhalten zu können.

Das Einsetzen der Reaktion ist durch die fast spontane Abspaltung von $CO_2$ zu erkennen, die auch bereits bei niedrigen Temperaturen, z.B. 20° C beobachtbar ist. Es ist jedoch erheblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanden gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

In einer diskontinuierlichen Ausführungsform wird z.B. die NCO-Gruppen aufweisende Verbindung a) in die wäßrige, Lösungsmittel und Katalysatoren enthaltende Mischung, eingebracht. Dies kann mittels eines Tropftrichters oder z.B. durch maschinelle Einspritzung mittels einer Düse geschehen, wobei durch intensives Rühren eine möglichst gute Verteilung angestrebt wird.

In einer kontinuierlichen Ausführungsform, die für eine großtechnische Produktion besonders geeignet ist, werden die NCO-Verbindungen a) (gegebenenfalls als Lösung) und die wäßrige Lösung getrennt einem gemeinsamen Reaktionsraum zudosiert, z.B. mittels eines Durchflußmischers intensiv vermischt, so zur Reaktion gebracht und aus dem Mischraum schnell ausgetragen. Die Dosierung kann z.B. über graduierte Tropftrichter oder mittels einer Kolben- und/oder Membrandosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung, zu vermischen, zur Reaktion zu bringen und aus dem Reaktionsraum auszutragen.

Zur Erleichterung der Reaktion der Isocyanatgruppen von a) mit der wäßrigen, katalysatorhaltigen Lösungsmittelphase können verschiedene Zusätze verwendet werden. So können zum Homogenisieren ein oder mehrere handelsübliche Emulgatoren zugesetzt werden, z.B. in Mengen von 0,01 bis 1 Gew.-% auf 100 Gew.-% Reaktionsmischung. Bei Verwendung homogener Reaktionsmischungen (gelöste Komponenten) ist dies jedoch nicht notwendig.

Bei den in der kontinuierlichen Ausführungsform geeigneten Durchflußmischern unterscheidet man zwischen den statischen Mischern mit festen Einbauten und dynamischen Mischern mit beweglichen Einbauten nach dem Rotor-Stator-Prinzip. Sie können gegebenenfalls geheizt oder gekühlt werden. Die erforderliche Mischenergie wird bei den statischen Mischern über die Pumpen aufgebracht, während bei den dynamischen Mischern ein separater Motor den Rotor treibt. In allen Fällen hängt der Reaktionsumsatz der Isocyanatgruppen zu Aminogruppen auch von der aufgebrachten Leistung, bzw. den entsprechend erzeugten Scherkräften, d.h, von der möglichst schnellen homogenen Verteilung der NCO-Verbindung im Reaktionsmedium ab.

Als statische Mischer lassen sich beispielsweise Mischer mit einfachen Einbauten (z.B. Wendeln) oder komplizierten Einbauten (z.B. Packungsmischern) oder Mehrkanalmischer verwenden, Weiterhin können auch Mischdüsen oder die Mischkammern in den HK-Maschinen der Fa. Hennecke (Birlinghoven, Bundesrepublik Deutschland), in die die Ausgangsprodukte unter hohem Druck eingedüst werden (Gegenstrominjektion), eingesetzt werden. Als dynamische Mischer kommen für das erfindungsgemäße Verfahren beispielsweise die Durchflußmischer in Betracht, die ebenso wie die bekannten Kreiselhomogenisierungsmaschinen nach dem Stator-Rotor-Prinzip arbeiten, dabei jedoch nicht als Förderorgane benutzt werden können. Die aufzubringende Mischungsleistung beträgt je nach gewünschtem Dispergiergrad, verwendetem Mischertyp und Viskosität der Ausgangsstoffe etwa 1 bis über 10 KW pro Liter Mischinhalt.

Nach dem Mischungsvorgang kann direkt zum Polyamin aufgearbeitet werden, gegebenenfalls kann auch eine kurze Nachreaktionszeit von meistens weniger als 5 Minuten angeschlossen werden. Hierbei wird das Reaktionsgemisch bevorzugt unter Normaldruck am leichten Rückfluß erhitzt, um das entstandene Kohlendioxid möglichst vollständig abzutrennen. Die Reaktionsmischung kann ohne Nachteile aber auch längere Zeit auf Temperatur gehalten werden. Bevorzugt wird nach erfolgter Vermischung jedoch sofort aufgearbeitet.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Es werden, gegebenenfalls unter reduziertem Druck, die flüchtigen Bestandteile abdestilliert. Im allgemeinen werden Sumpftemperaturen (im verbleibenden Polyamin) von 100 bis etwa 130° C gegen Ende der Eindampfung eingehalten.

Bei Verwendung eines Dünnschichtverdampfers können kurzfristig deutlich höhere Temperaturen, z.B. 170 bis 200° C, im Polyamin erreicht werden.

Extraktionsverfahren, gegebenenfalls nach Verdünnung mit Wasser, können mit wasserunlöslichen Lösungsmitteln wie Methylenchlorid oder Chlorbenzol durchgeführt werden, sind jedoch nicht bevorzut.

Eine Phasentrennung des Reaktiansgemisches durch Abkühlen tritt in manchen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser verbessert oder auch erst erreicht werden. Man trennt die wäßrige, gegebenenfalls Lösungsmittel und zumeist auch den Katalysator enthaltende Phase von der Polyaminphase ab.

Die wäßrige Phase kann dann meistens direkt wiederverwendet werden.

Die Polyaminphase enthält neben dem Polyamin gegebenenfalls Restmenge des Katalysators, etwas Wasser, sowie evtl. Lösungsmittel d), welche destillativ, gegebenenfalls unter Anlegung eines Vakuum oder über eine Dünnschichtdestillation, möglichst völlständig entfernt werden.

Enthält die NCO-Gruppen-haltige Verbindung - bedingt durch ihre Herstellung - noch freies, d.h. monomeres Isocyanat, so kann u.U. das hieraus entstehende monomere Amin bei der Aufarbeitung durch Phasentrennung sich in der Wasser/Lösungsmittelphase stark anreichern. Das durch diese einfache Aufarbeitung erhaltene Polyamin ist dann praktisch monomerenfrei. Es kann sich dann aber empfehlen, die wäßrige Lösung durch Aufarbeitung von monomerem Amin weitgehend zu befreien, bevor sie wiederverwendet wird.

Bevorzugt erfolgt die Aufarbeitung des Reaktionsgemisches so, daß nach Beendigung der Reaktion (keine $CO_2$-Entwicklung mehr zu beobachten) das Lösungsmittel bzw. Lösungsmittel/Wasser-Gemisch abdestilliert, bvz. unter Anwendung von Vakuum, z.B 1 - 700 Torr, wird, wobei zur Entfernung flüchtiger Reste noch höheres Vakuum, z.B. 0,001 - 1 Torr, angelegt werden kann. Ein Temperaturbereich von anfangs ca. 60 - 100°C, später 80 - 130°C` hat sich hierbei bewährt. Das abdestillierte Lösungsmittel kann wiederverwendet werden.

Die nach der Aufarbeitung erfindungsgemäß erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner Urethanund/oder Harnstoff- und/oder Uretdion- und/oder Isocyanuratund/oder Biuretgruppen, sowie gegebenenfalls Ether- und/oder Acetal- und/oder Carbonatund/oder Ester- und/oder Thiolether und/oder Dialkylsiloxangruppen und/oder die Reste von Polybutadienen auf, wie sie bereits in den NCO-Verbindungen vorgelegen haben. Durch Nebenreaktionen können jedoch auch zusätzlich Bindungen, ggf. auch anderer Art, entstehen, z.B. Harnstoffgruppen aus bereits verseiften Anteilen und noch verbliebenen NCO-Gruppen während der Hydrolysereaktion. Die Menge der in den Polyaminen enthaltenen primären aromatischen Aminogruppen entsprechen maximal der Menge der NCO-Gruppen in den NCO-Verbindungen, also etwa 0,19 bis 20,3 Gew.-% $NH_2$, bevorzugt 0,46 bis 11,3 Gew.-% $NH_2$ und besonders bevorz_.t 0,58 bis 6,7 Gew.-% $NH_2$.

Die erfindungsgemäß erhaltenen, bevorzugt aromatischen Polyamine werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfsund Zusatzstoffe.

Die Herstellung von Polyurethan(hernstoff)en mittels der erfindungsgemäß hergestellten Polyamine ist ebenfalls Gegenstand der vorliegenden Erfindung. Ihre Anwendung kann z.B. für Elastomere, Beschichtungen, Fäden in der Applikation aus Schmelzen, Lösungen, Dispersionen oder als Reaktivkomponentenmischung erfolgen.

Weitere Verwendungszwecke der erfindungsgemäß hergestellten Polyamine sind z.B. Kupplungskomponenten für Diazofarbstoffe, Härter für Epoxid- und Phenolharze, sowie alle anderen an sich bekannten Reaktionen von Aminen wie Amid- oder Imidbildung.

Die folgenden Beispiele dienen der Erläuterung des erfindungsgmäßen Verfahrens. Wenn nicht anders vermerkt, sind Mengenangaben als Gewichtsteile bzw. Gewichtsprozente zu verstehen.

Beispiele

Beispiel 1

Vorgelegt wird ein 90°C warmes Gemisch aus 1750 g N,N-Dimethylformamid (DMF), 50 ml Wasser und 1 g N-n-Butyl-diethanolamin. Innerhalb von 20 min werden 500 g eines Prepolymeren mit einem NCO-Gehalt von 3,65 %, hergestellt durch 3-stündiges Rühren bei 80°C von Toluylen-2,4-diisocyanat und Polypropylenglykol der OH-Zahl 56 bei einem NCO:OH-Äquivalentverhältnis von 2:1, unter $CO_2$-Entwicklung zugegeben. Nach Beendigung der Zugabe von 5 min weitergerührt, dann bei zuerst 15 und später 0,1 Torr das DMF und restliche Wasser abdestilliert. Das Produkt hinterbleibt als helles Öl.

(NH + OH)-Zahl $Ac_2O$/Pyridin): 32,5 mg KOH/g
Säure-Zahl: 0,3 mg KOH/g
NH-Zahl ($HClO_4$): 35,9 mg KOH/g
TDA-Gehalt (HPLC): 0,064 %

## Beispiel 2

Vorgelegt wird ein 90°C warmes Gemisch aus 1750 g DMF, 50 g Wasser und 3 g N-n-Butyl-diethanolamin. Innerhalb von 20 min werden unter Rühren 500 g eines Prepolymeren mit einem NCO-Gehalt von 3,6 %, hergestellt wie bei Beispiel 1, zugegeben und wie bei Beispiel 1 aufgearbeitet.

NH-Zahl ($HClO_4$): 35,2 mg KOH/g

## Beispiel 3

Vorgelegt wird ein Gemisch aus 1100 g DMF, 25 g Wasser und 3 g N,N-Dimethylaminoethanol. Bei 90°C wird unter Rühren innerhalb von 20 min 500 g eines Prepolymeren mit einem NCO-Gehalt von 3,2 %, hergestellt wie bei Beispiel 1, zugegeben und wie bei Beispiel 1 aufgearbeitet.

NH-Zahl ($HClO_4$): 34,8 mg KOH/g

## Beispiel 4

Vorgelegt wird ein 95°C heißes Gemisch aus 1100 g DMF, 25 g Wasser und 0,1 g Methylaminoessigsäure-natriumsalz. Unter Rühren werden in 20 min 500 g des NCO-Prepolymers aus Beispiel 3 zugetropft und wie in Beispiel 1 aufgearbeitet.

NH-Zahl ($HClO_4$): 43,4 g mg KOH/g
NH-Zahl ($Ac_2O$/Pyridin) 46,3 mg KOH/g
Säure-Zahl: 0,2 mg KOH/g, TDA-Gehalt (HPLC): 0,397 %

## Beispiel 5

Vorgelegt wird ein 90°C heißes Gemisch aus 1100 g DMF, 25 g Wasser und 1 g Na-ricinolat. Unter Rühren werden in 20 min 500 g des NCO-Prepolymers aus Beispiel 3 zugegeben und der Ansatz wie in Beispiel 1 aufgearbeitet.

NH-Zahl ($HClO_4$): 45,1 mg KOH/g
NH-Zahl ($Ac_2O$/Pyridin): 46,7 mg KOH/g
Säure-Zahl: 0,2 mg KOH/g; TDA-Gehalt (HPLC): 0,401 %

## Beispiel 6

Vorgelegt wird eine 90°C heiße Mischung aus 1100 g DMF, 25 g Wasser und 1 g Dimethylolpropionsäure-natriumsalz. Innerhalb 20 min werden bei dieser Temperatur unter Rühren 500 g des NCO-Prepolymers aus Beispiel 3 zugegeben und wie bei Beispiel 1 aufgearbeitet.

NH-Zahl ($HClO_4$): 43,6 mg KOH/g
NH-Zahl ($Ac_2O$/Pyridin): 50,5 mg KOH/g
Säure-Zahl: 0,2 mg KOH/g; TDA-Gehalt (HPLC): 0,530 %

## Beispiel 7

Vorgelegt wird eine 90°C heiße Mischung aus 1100 g DMF, 25 g Wasser und 0,1 g Dimethylolpropionsäure-natriumsalz. Innerhalb von 20 min werden bei dieser Temperatur unter Rühren 500 g eines Prepolymers des NCO-Gehalte 3,4 %, hergestellt wie in Beispiel 1, zugegeben und wie bei Beispiel 1 aufgearbeitet.

NH-Zahl ($HClO_4$): 43,5 mg KOH/g
NH-Zahl ($Ac_2O$/Pyridin): 41,7 mg KOH/g
Säure-Zahl ($Ac_2O$/Pyridin): 0,2; TDA-Gehalt (HPLC): 0,113 %

## Beispiel 8

Vorgelegt wird eine 90°C heiße Mischung aus 1100 g DMF, 25 g Wasser und 5 g Dimethylolpropionsäure-natriumsalz. Innerhalb von 20 min werden bei dieser Temperatur unter Rühren 500 g Prepolymer aus Beispiel 7 zugegeben und wie bei Beispiel 1 aufgearbeitet.

NH-Zahl ($HClO_4$): 39,1 mg KOH/g
NH- + OH-Zahl ($Ac_2O$/Pyridin): 36,4 mg KOH/g
Säure-Zahl: 0,4 mg KOH/g
TDA (HPLC): 0,034 %

## Beispiel 9

Vorgelegt wird ein 90°C warmes Gemisch aus 1750 g DMF, 50 g Wasser, 3 g N-n-Butylethanolamin und 0,005 g NaOH. Innerhalb von 20 min werden bei dieser Temperatur unter Rühren 500 g eines NCO-Prepolymers mit einem NCO-Gehalt von 3,5 %, hergestellt wie in Beispiel 1, zugegeben. Aufarbeitet wird wie in Beispiel 1.
NH-Zahl (HClO₄): 46,5 mg KOH/g.

Beispiel 10

Vorgelegt wird ein 90°C warmes Gemisch aus 2200 ml DMF, 50 ml Wasser, 0,01 g NaOH und 1 g N-n-Butyldiethanolamin. Innerhalb von 20 min werden 1000 g eines NCO-Prepolymers des Gehalts 3,4 % NCO, hergestellt durch 3-stündiges Rühren von Toluylendiisocyanat und einem Ethylen-Butandiol-1,4-Adipat der OHZ 56 (Ethylenglykol:Butandiol-1,4-Verhältnis 1:1) im NCO:OH-Verhältnis 2:1 bei 80°C, zugegeben. Aufgearbeitet wird wie in Beispiel 1.
HH-Zahl (HClO₄): 40,3 mg KOH/g
NH-Zahl (Ac₂O/Pyridin): 38,5 mg KOH/g
Säure-Zahl (Ac₂O/Pyridin): 0,4 mg KOH/g
TDA-Gehalt: 0,384 %

Beispiel 11

Vorgelegt wird ein Gemisch aus 1100 1 DMF, 25 ml Wasser und 3,86 g NaOH. Zugegeben innerhalb von 20 min werden 500 g eines HCO-Prepolymers (NCO-Gehalt = 4,9 %), erhalten durch 4-stündiges Rühren bei 80°C eines Gemisches aus 1 mol Polypropylenglykol mit einer OH-Zahl von 56, 0,5 mol Dimethylolpropionsäure und 3 mol Toluylendiisocyanat. Nach üblicher Aufarbeitung erhält man ein Polyamin mit einer NH-Zahl (HClO₄) von 37,6 mg KOH/g.

Beispiel 12

Vorgelegt wird eine 40°C warme Mischung aus 1100 g DMF, 25 g Wasser und 0,1 g Dimethylolpropionsäure-netriumselz. Innerhalb von 20 min werden bei dieser Temperatur unter Rühren 500 g eines Prepolymers des NCO-Gehalts 3,4 %, hergestellt wie bei Beispiel 1, zugegeben und wie bei Beispiel 1 aufgearbeitet.
NH-Zehl (HClO₄): 41,2 mg KOH/g
NH-Zahl (Ac₂O/Pyridin): 41,1 mg KOH/g
Säure-Zahl (Ac₂O/Pyridin): 0,2 mg KOH/g
TDA-Gehalt (MPIC): 0,024 %.

**Ansprüche**

1. Einstufen-Verfahren zur Herstellung von primäre Aminogruppen aufweisenden Polyaminen durch Hydrolyse von NCO-Gruppen aufweisenden Verbindungen in Wasser enthaltenden Medien, indem man

a) endständige NCO-Gruppen aufweisende Verbindungen, vorzugsweise mit aromatisch gebundenen NCO-Gruppen, mit einem NCO-Gehalt von 0,5 - 40 Gew.-% mit

b) mindestens 1 Mol Wasser pro Äquivalent NCO der Komponente a)

c) in Gegenwart von sowie

d) in Gegenwart von > 10 Gew.-%, bezogen auf 100 Gew.-% der Komponente a) an wassermischbaren aprotisch-dipolaren Lösungsmitteln, jedoch mindestens in einer solchen Menge, daß eine im wesentlichen homogene, einphasige Mischung entsteht, und gegebenenfalls

e) in Gegenwart von nicht im Sinne von c) katalytisch wirksamen Verbindungen mit ein oder mehreren, an aliphatische, cycloaliphatische, heterocyclische oder aromatische Reste gebundenen Hydroxy- und/oder Amino- und/oder Thiolgruppen unter Aufrechterhaltung einer im wesentlichen homogenen Reaktionsmischung bei Temperaturen von 20 bis 210°C hydrolysiert, dadurch gekennzeichnet, daß als Komponente c) über mindestens eine NCO-reaktive Gruppe einbaufähige oder bereits in Komponente a) eingebaute Katalysatoren eingeseted werden, wobie in Abwesenheit von Alkalicarbonaten, Alkalihydrogencarbonaten und nicht einbaufähigen Alkali- und Erdalkalisalzen von Mono- oder Polycarbonsäuren gearbeitet wird, und wobei man das Reaktionsgemisch gegebenenfalls während oder nach der Hydrolyse mit einer Säure behandelt.

2. Verfahren nach Anspruch 1, dadurch gekennzeichnet, daß die einbaufähigen Katalysatoren c) in Kombination mit Alkali- oder Erdalkali-Hydroxiden eingesetzt werden.

3. Verfahren nach einem der Ansprüche 1 oder 2, dadurch gekennzeichnet, daß man als einbaufähige Katalysatoren c) Alkalisalze von Hydroxycarbonsäuren und/oder von Aminocarbonsäuren und/oder t-Aminoalkohole in Mengen von 0,0001 - 10 Gew.-%, bezogen auf 100 Gew.-% Komponente a), einsetzt.

4. Verfahren nach einem der Ansprüche 1-3, dadurch gekennzeichnet, daß man die Hydrolyse in Gegenwart der 2 bis 10-fachen stöchiometrischen Menge von Wasser, bezogen auf NCO, vornimmt.

5. Verfahren nach einem der Ansprüche 1 bis 4, dadruch gekennzeichnet, daß man die Hydrolyse in Gegenwart von wassermischbaren Lösungsmitteln mit Carbonsäuredialkylamid-, Lactam-, Tetraalkylharnstoff-, Sulfon-, Sulfoxid-, Phosphordialkylamid-Gruppen, mit einem Siedepunkt von 56 bis 250° C und in Mengen von > 50 Gew.-% d), bezogen auf 100 Gew.-% a), vornimmt.

6. Verfahren nach einem der Ansprüche 1 bis 5, dadurch gekennzeichnet, daß man als NCO-Verbindungen a) NCO-Prepolymere mit einem Gehalt von 1,5 bis 15 Gew.-% aromatisch gebundenem NCO auf Basis von höhermolekularen, di- oder trifunktionellen Polyether-, Polyester-, Polycarbonat- und Polycaprolacton-Polyolen einsetzt.

7. Verfahren nach einem der Ansprüche 1-6, dadurch gekennzeichnet, daß die NCO-Verbindungen a) freie Carboxylgruppen und/oder Carboxylatgruppen und/oder t.-Aminogruppen enthalten.

8. Verfahren nach einem der Ansprüche 1 bis 7, dadurch gekennzeichnet, daß man die Hydrolyse kontinuierlich durchführt.

9. Verwendung der nach den Ansprüchen 1-8 erhaltenen Polyamine als Reaktionskomponente beim Aufbau von Polyurethanen.

## Claims

1. A single-stage process for the production of polyamines containing primary amino groups by hydrolysis of compounds containing NCO groups in water-containing media in which
   a) NCO-terminated compounds preferably containing aromatically bound NCO groups and having an NCO content of 0.5 to 40% by weight are hydrolyzed with
   b) at least 1 mol water per NCO equivalent of component a)
   c) in the presence of catalysts and
   d) in the presence of > 10% by weight, based on 100% by weight of component a), of water-miscible aprotic dipolar solvents, but at least in such a quantity that a substantially homogeneous single-phase mixture is formed, and optionally
   e) in the presence of compounds containing one or more hydroxy and/or amino and/or thiol groups which are not catalytically active in the sense of c), at temperatures of 20 to 210° C, a substantially homogeneous mixture being maintained during hydrolysis, characterized in that catalysts incorporable through at least one NCO group or already incorporated in component a) are used as component c), the reaction being carried out in the absence of alkali carbonates, alkali hydrogen carbonates and non-incorporable alkali and alkaline earth metal salts of mono-or polycarboxylic acids and the reaction mixture optionally being treated with an acid during or after hydrolysis.

2. A process as claimed in claim 1, characterized in that the incorporable catalysts c) are used in combination with alkali or alkaline earth metal hydroxides.

3. A process as claimed in claim 1 or 2, characterized in that alkali metal salts of hydroxycarboxylic acids and/or aminocarboxylic acids are used in quantities of 0.0001 to 10% by weight, based on 100% by weight of component a), as incorporable catalysts c).

4. A process as claimed in any of claims 1 to 3, characterized in that the hydrolysis reaction is carried out in the presence of 2 to 10 times the stoichiometric quantity of water, based on NCO.

5. A process as claimed in any of claims 1 to 4, characterized in that the hydrolysis is carried out in the presence of water-miscible solvents containing carboxylic acid dialkylamide, lactam, tetraalkyl urea, sulfone, sulfoxide, phosphorus dialkylamide groups and having a boiling point in the range from 56 to 250° C in quantities of > 50% by weight of d), based on 100% by weight of a).

6. A process as claimed in any of claims 1 to 5, characterized in that the NCO compounds a) used are NCO prepolymers containing 1.5 to 15% by weight aromatically bound NCO based on relatively high molecular weight difunctional or trifunctional polyether, polyester, polycarbonate and polycaprolactone polyols.

7. A process as claimed in any of claims 1 to 6, characterized in that the NCO compounds a) contain free carboxyl groups and/or carboxylate groups and/or tert. amino groups.

8. A process as claimed in any of claims 1 to 7, characterized in that the hydrolysis reaction is carried out continuously.

9. The use of the polyamines obtained by the process claimed in claims 1 to 8 as a reaction component in the synthesis of polyurethanes.

## Revendications

1. Procédé à une seule étape pour la production de polyamines portant des groupes amino primaires par hydrolyse de composés porteurs de groupes NCO dans des milieux contenant de l'eau, dans lequel on hydrolyse

    a) des composés porteurs de groupes NCO terminaux, de préférence porteurs de groupes NCO en liaison aromatique, ayant une teneur en groupes NCO de 0,5 à 40 % en poids, avec

    b) au moins 1 mole d'eau par équivalent de NCO du composant a)

    c) en présence de catalyseurs de même que

    d) en présence d'une proportion égale ou supérieure à 10 % en poids, pour 100 % en poids de composant a), de solvants aprotiques dipolaires miscibles à l'eau, au minimum toutefois en une quantité telle qu'un mélange principalement homogène à phase unique soit produit, et, le cas échéant

    e) en présence de composés sans activité catalytique dans le sens de c) portant un ou plusieurs groupes hydroxy et/ou amino et/ou thiol liés à des restes aliphatiques, cyclo-aliphatiques, hétérocycliques ou aromatiques, avec maintien d'un mélange réactionnel principalement homogène, en opérant à des températures de 20 à 210° C, caractérisé en ce qu'on utilise comme composant c) des catalyseurs pouvant être incorporés par l'intermédiaire d'au moins un groupe réactif envers des groupes NCO ou déjà incorporés dans le composant a), en opérant en l'absence de carbonates alcalins, d'hydrogénocarbonates alcalins et de sels alcalins et alcalino-terreux, non susceptibles d'incorporation, de mono-acides ou de polyacides carboxyliques, et on traite le mélange réactionnel avec un acide, le cas échéant, pendant ou après l'hydrolyse.

2. Procédé suivant la revendication 1, caractérisé en ce que les catalyseurs c) susceptibles d'incorporation sont utilisés en association avec des hydroxydes de métaux alcalins ou alcalino-terreux.

3. Procédé suivant l'une des revendications 1 et 2, caractérisé en ce qu'on utilise comme catalyseurs c) susceptibles d'incorporation des sels alcalins d'acides hydroxycarboxyliques et/ou d'acides aminocarboxyliques et/ou de tertio-amino-alcools en quantités de 0,0001 à 10 % en poids, pour 100 % en poids de composant a).

4. Procédé suivant l'une des revendications 1 à 3, caractérisé en ce qu'on effectue l'hydrolyse en présence de 2 à 10 fois la quantité stoechiométrique d'eau, par rapport à NCO.

5. Procédé suivant l'une des revendications 1 à 4, caractérisé en ce qu'on effectue l'hydrolyse en présence de solvants miscibles à l'eau portant des groupes dialkylamide d'acide carboxylique, lactame, tétra-alkylurée, sulfone, sulfoxyde, dialkylamide d'acide phosphorique, ayant un point d'ébullition de 56 à 250° C et dans des quantités égales ou supérieures à 50 % en poids de d), pour 100 % en poids de a).

6. Procédé suivant l'une des revendications 1 à 5, caractérisé en ce qu'on utilise comme composés a) porteurs de groupes NCO des NCO prépolymères ayant une teneur en NCO en liaison aromatique de 1,5 à 15 % en poids à base de polyéther-, polyester-, polycarbonate- et polycaprolactone-polyols difonctionnels ou trifonctionnels de poids moléculaire élevé.

7. Procédé suivant l'une des revendications 1 à 6, caractérisé en ce que les composés a) porteurs de groupes NCO contiennent des groupes carboxyle libres et/ou des groupes carboxylate et/ou des groupes tertio-amino.

8. Procédé suivant l'une des revendications 1 à 7, caractérisé en ce qu'on conduit l'hydrolyse en continu.

9. Utilisation des polyamines obtenues suivant les revendications 1 à 8 comme composant réactionnel dans l'édification de polyuréthannes.